# EUROPÄISCHE PATENTSCHRIFT

(11) **EP 2 892 941 B1**
(45) Veröffentlichungstag und Bekanntmachung des Hinweises auf die Patenterteilung: **16.11.2016**
(21) Anmeldenummer: 13756154.4
(22) Anmeldetag: 02.09.2013
(51) Int. Cl.: C08G 69/06

(54) **VERFAHREN ZUR HERSTELLUNG VON POLYAMIDEN DURCH POLYKONDENSATION**
METHOD FOR THE PRODUCTION OF POLYAMIDES BY MEANS OF POLYCONDENSATION
PROCÉDÉ DE FABRICATION DE POLYAMIDES PAR POLYCONDENSATION

(30) Priorität: 03.09.2012 EP 12182757
(43) Veröffentlichungstag der Anmeldung: 15.07.2015
(73) Patentinhaber: BASF SE, 67056 Ludwigshafen am Rhein (DE)
(72) Erfinder: STAMMER, Achim, 67251 Freinsheim (DE); EL-TOUFAILI, Faissal-Ali, 67063 Ludwigshafen (DE); GRAMLICH, Simon, 69493 Hirschberg (DE); ULZHÖFER, Angela, 67065 Ludwigshafen (DE)
(86) Internationale Anmeldenummer: PCT/EP2013/068075
(87) Internationale Veröffentlichungsnummer: WO 2014/033294

(56) Entgegenhaltungen:
- GB-A- 2 006 239
- US-A- 3 379 696

## Beschreibung

Die Erfindung betrifft ein Verfahren zur Herstellung von Polyamiden durch Polykondensation.

Viele Polymere, beispielsweise Polyamid-6.6, werden durch Polykondensation der Ausgangsmonomere hergestellt. Hierbei kommen unterschiedliche Verfahrensvarianten zum Einsatz.

Ullmann's Encyclopedia of Industrial Chemistry, 2012, Seiten 549 bis 552, beschreibt ein Batch-Verfahren zur Herstellung von Polyamid-6.6, bei dem die Umsetzung in einem Autoklaven bei einer Maximaltemperatur von etwa 270 °C und einem Maximaldruck von etwa 17 bar erfolgt. Dabei wird eine 65 bis 80 %-ige Monomerlösung einem Autoklaven zugeführt, in dem sie auf 210 °C unter autogenem Druck erhitzt wird bis zu einem Druck von 1,75 MPa. Sodann wird die Temperatur stufenweise auf etwa 275 °C erhöht, während Dampf in einem Umfang abgelassen wird, der die Aufrechterhaltung des Drucks erlaubt. Sodann wird der Druck langsam vermindert, ohne dass das Reaktionsgemisch abkühlt. Abschließend wird das Polymer unter Inertgas extrudiert. In dem Verfahren wird darauf geachtet, dass genug Wasser vorliegt, um ein Ausfrieren des Batches zu verhindern, bevor der Schmelzpunkt erreicht wird. Es können gerührte Autoklaven eingesetzt werden.

Die DE-A-1 545 145 beschreibt ein Verfahren zur Herstellung von Polyamiden aus Dicarbonsäuren und Diaminen, bzw. deren Salzen durch Polykondensation in fester Phase, bei dem man die Polyamid-bildenden Monomere zunächst in einem geschlossenen Gefäß in Stickstoff-atmosphäre unter Rühren 2 bis 6 Stunden lang auf eine Temperatur erwärmt, die 10 bis 20 °C unterhalb der Schmelztemperatur der Monomeren liegt. Dabei stellt sich ein Druck von 13 bis 15 atü ein, bis ein Vorkondensat mit einer Lösungsviskosität von 1,35 bis 1,40 entstanden ist. Anschließend wird innerhalb von 30 Minuten unter verstärkter Wärmezufuhr auf etwa 2 atü entspannt und danach unter Erhöhung der Reaktionsmasse auf eine Temperatur, die 20 bis 65 °C unterhalb der Schmelztemperatur des Endpolykondensates liegt, noch ein bis zwei Stunden weiter kondensiert.

Beispielsweise wird trockenes AH-Salz in einem geschlossenen Autoklaven unter Rühren vier Stunden auf 190 bis 195 °C erhitzt. Anschließend wird innerhalb von 30 Minuten auf 2 atü entspannt und unter weiterem Rühren drei Stunden lang bei 200 bis 205 °C unter Stickstoffstrom erhitzt. Sodann wird das erhaltene Polyamid abgekühlt. Es weist einen Schmelzpunkt von 262 bis 266 °C auf.

US 3,379,696 A beschreibt ein Verfahren zur Herstellung von Polyamiden aus Dicarbonsäuren und Diaminen, bzw. deren Salzen, durch Polykondensation in fester Phase. Bei der Polykondensation werden die polyamidbildenden Polymere zunächst in einem geschlossenen Gefäß unter einer Stickstoff-Atmosphäre zwei bis sechs Stunden lang gerührt und auf eine Temperatur erwärmt, die 10 bis 30°C unterhalb der Schmelztemperatur der Monomere liegt. In diesem Schritt wird ein atmosphärischer Druck von 13 bis 15 atm generiert, um ein Präkondensat zu erhalten.

GB 2 006 239 A betrifft ein Polykondensationsverfahren in Masse zur Herstellung fester, disperser Polykondensate. Insbesondere wird ein Verfahren zur Herstellung der gewünschten Polykondensate in Form einer Dispersion durch Polykondensation von Monomeren oder Reaktionsteilnehmer-Gemischen beschrieben, die bei der Polykondensationstemperatur in fließfähiger Form vorliegen, bis es zur Bildung einer festen Dispersion kommt.

Diese Festphasen-Polykondensation hat den Nachteil, dass die Verfahrenstemperatur durch den Schmelzpunkt der Ausgangsmaterialien limitiert wird, was zu einer geringen Produktionskapazität führt.

Eine Polykondensation in Masse, die bei einer Temperatur oberhalb des Schmelzpunkts des erhaltenen Polymers erfolgt, führt aufgrund der hohen Temperatur zu Nebenreaktionen, die zu einer Verschlechterung der Polymer-Eigenschaften führen können.

Alternativ wird auch eine Lösungspolykondensation angewandt, bei der die Ausgangsmonomere in einem Lösungsmittel gelöst werden. Nachteilig ist, dass die erhaltenen Polykondensate vom Lösungsmittel abgetrennt und getrocknet werden müssen, was zusätzliche Verfahrensschritte bedingt.

Aufgabe der vorliegenden Erfindung ist die Bereitstellung eines Verfahrens zur Herstellung von Polyamiden durch Polykondensation in Abwesenheit von organischen Lösungs- oder Verdünnungsmitteln, das bei einer Temperatur durchgeführt werden kann, die zu einer maximierten Produktionskapazität führt und gleichzeitig das Auftreten von Nebenreaktionen vermindert.

Die Aufgabe wird erfindungsgemäß gelöst durch ein Verfahren zur Herstellung von Polyamiden durch Polykondensation von polyamidbildenden, polykondensierbaren Monomeren und/oder Oligomeren, in diese enthaltenden Reaktionsgemischen, die wasserhaltig sind, aber frei von organischen Lösungsmitteln sind, wobei die Polykondensation in einem Reaktor mit Mischer unter Vermischen in einem ersten Schritt in flüssiger Phase erfolgt und nach einem während des Prozesses im selben Reaktor stattfindenden Phasenumbruchs in einem nachfolgenden zweiten Schritt in fester Phase erfolgt, wobei zumindest im zweiten Schritt die Temperatur im Reaktor unterhalb des Schmelzpunktes des Polyamids liegt, und wobei die polykondensierbaren Monomere und/oder Oligomere zu Beginn der Polykondensation in einem Gewichtsverhältnis zu Wasser in einem Bereich von 0,5 : 1 bis 5 : 1 vorliegen.

Es wurde erfindungsgemäß gefunden, dass die Herstellung von Polyamid-Polykondensaten mit hoher Produktionskapazität bei gleichzeitiger Verminderung von Nebenreaktionen möglich ist, wenn die Polykondensation bei Temperaturen oberhalb des Schmelzpunktes der Monomeren, aber unterhalb des Schmelzpunktes des resultierenden Polyamids in Abwesenheit eines von Wasser verschiedenen Lösungs- oder Verdünnungsmittels in einem Reaktor erfolgt, der die notwendige Verweilzeit ermöglicht. Durch das erfindungsgemäße Verfahren können Polykondensate mit hohem Molekulargewicht erhalten werden, wenn im Wesentlichen äquivalente Mengen an Monomeren eingesetzt werden. Im Laufe der Polykondensation werden unter Molekulargewichtsaufbau höher molekulare Kondensate gebildet, deren Schmelzpunkte in der Regel über den Schmelzpunkten der niedrigmolekularen Vorläufer, wie Monomeren oder Oligomeren, liegen. Wenn der Schmelzpunkt des Reaktionsgemisches höher als die Betriebstemperatur des Reaktors wird, tritt eine Produktverfestigung auf, und die Umsetzung wird in der Festphase weitergeführt. Durch den im Reaktor vorgesehenen Mischer kommt zu einer Zerteilung des festen Polykondensates. Der Verlauf der Polykondensation kann durch den Energiebedarf beispielsweise eines mechanischen Mischers verfolgt werden. Solange das flüssige Gemisch der Monomeren oder niedermolekularen Polykondensate bewegt wird, ist nur eine mäßige Mischenergie notwendig. Sobald es zu einem Anstieg des Molekulargewichts und Schmelzpunkt des Polykondensates oberhalb der Reaktortemperatur kommt, tritt eine Verfestigung des Reaktionsgemisches ein, die zu einem stark erhöhten Energieaufwand des Mischers führt. Es folgt eine Zerteilung des festen Polykondensates, wodurch der weitere Bedarf an mechanischer Energie wieder absinkt.

Das erfindungsgemäße Verfahren ist in der Regel ein Batch-Verfahren, in dem die, gegebenenfalls wasserhaltigen, Monomere in einen Reaktor gegeben werden, der mit einem, in der Regel mechanischen, Mischer ausgestattet ist. Hierbei können beliebig geeignete Reaktoren eingesetzt werden, wie sie für Polykondensationen üblich sind. Es kann sich beispielsweise um gerührte Autoklaven handeln. Auch der Einsatz von Mischknetern ist möglich. Geeignete Mischkneter weisen in der Regel mindestens zwei achsparallele rotierende Wellen auf, von denen die Hauptwelle Scheibenflächen aufweisen kann mit an ihrem Umfang angeordneten Knetbarren. Geeignete Mischkneter sind in DE-A-41 18 884 und DE-A-199 40 521 beschrieben.

Das erfindungsgemäße Verfahren ist insbesondere dadurch charakterisiert, dass eine Umsetzung im ersten Schritt in flüssiger Phase, ein sodann stattfindender Phasenumbruch und eine nachfolgende Umsetzung im zweiten Schritt in fester Phase in nur einem Reaktor erfolgt, ohne dass das Reaktionsgemisch zwischenzeitlich ausgetragen oder in einen anderen Reaktor überführt wird. Erfindungsgemäß wird der zweite Schritt bevorzugt unmittelbar auf den ersten Schritt folgend im identischen Reaktor durchgeführt.

Der Begriff "Phasenumbruch" bezeichnet einen Phasenübergang von der flüssigen Phase zur festen Phase im Reaktor.

Zumindest im zweiten Schritt des erfindungsgemäßen Verfahrens liegt die Temperatur im Reaktor unterhalb des Schmelzpunktes des Polyamids. Bevorzugt liegt im gesamten Verfahren die Temperatur im Reaktor unterhalb des Schmelzpunktes des herzustellenden Polyamids.

Bevorzugt liegt im zweiten Schritt die Temperatur im Reaktor oberhalb der Glasübergangstemperatur des Polyamids und damit zwischen der Glasübergangstemperatur des Polyamids und dem Schmelzpunkt des Polyamids.

Besonders bevorzugt werden Polyamide (Polykondensate) in dem erfindungsgemäßen Verfahren hergestellt, die einen Schmelzpunkt nach Beendigung des zweiten Schrittes von mindestens 260 °C, besonders bevorzugt mindestens 265 °C aufweisen.

Dabei beträgt im zweiten Schritt die Maximaltemperatur im Reaktor vorzugsweise mindestens 25 °C, besonders bevorzugt mindestens 30 °C, insbesondere mindestens 35 °C unter dem Schmelzpunkt des Polyamids. Besonders bevorzugt liegt die Maximaltemperatur im Reaktor mindestens 40 °C unter dem Schmelzpunkt des Polyamids.
ie Temperatur im Reaktor steigt im Laufe der Polykondensation vorzugsweise bis zum Phasenumbruch kontinuierlich und/oder stufenweise an.

Die Umsetzungszeit im ersten Schritt beträgt vorzugsweise 0,5 bis 10 Stunden, besonders bevorzugt 2 bis 6 Stunden, insbesondere 3 bis 4 Stunden.

Die Umsetzungszeit im zweiten Schritt beträgt vorzugsweise 0,3 bis 5 Stunden, besonders bevorzugt 0,5 bis 2 Stunden, insbesondere 1 bis 2 Stunden.

Vorzugsweise erfolgt vor der Polykondensation im ersten Schritt keine Polykondensation in fester Phase und dies bedeutet, dass die erfindungsgemäße Polykondensation zunächst die Umsetzung in flüssiger Phase und erst nachfolgend die Umsetzung in fester Phase umfasst, jedoch keine Umsetzung in fester Phase vor der Umsetzung in flüssiger Phase.

Im erfindungsgemäßen Verfahren wird die Polykondensation vorzugsweise bei einem Druck von maximal 10 bar, besonders bevorzugt maximal 7 bar, insbesondere maximal 5,5 bar durchgeführt.

Die Maximaltemperatur in der Umsetzung beträgt vorzugsweise 200 bis 250 °C, besonders bevorzugt 210 bis 230 °C, insbesondere bei der Herstellung von Polyamid-6.6.

Die polykondensierbaren Monomere und/oder Oligomere können zu Beginn der Polykondensation wasserhaltig sein, bzw. werden im Gemisch mit Wasser eingesetzt. Dabei beträgt das Gewichtsverhältnis von polykondensierbaren Monomeren zu Wasser besonders bevorzugt 1 : 1 bis 2 : 1, insbesondere 1,2 : 1 bis 1,7 : 1.

Im Verlauf des erfindungsgemäßen Verfahrens kann zunächst unter autogenem Druck aufgeheizt werden, bis der gewünschte Zieldruck (Maximaldruck) erreicht ist. Sodann kann eine Gasphase aus dem Reaktionsgemisch ausgetragen werden, um bei der gewünschten Umsetzungstemperatur den Maximaldruck einstellen zu können. Typischerweise wird im Laufe der Umsetzung im Reaktionsgemisch vorliegendes oder durch die Polykondensation gebildetes Wasser dampfförmig ausgetragen. Auch bei der Polykondensation entstehende niedermolekulare Verbindungen, die durch die polykondensierenden Monomere freigesetzt werden, können dampfförmig ausgetragen werden.

Typischerweise steigt der Druck von Umgebungsdruck im Laufe des ersten Verfahrensschritts bis auf den Maximaldruck an. Im Laufe des zweiten Schritts wird der Druck dann vorzugsweise nach und nach auf Umgebungsdruck vermindert, bei dem dann das erhaltene Polykondensat aus dem Reaktor ausgetragen wird.

Besonders bevorzugt dient das Verfahren zur Herstellung von Polyamiden, die durch Umsetzung von Dicarbonsäuren und Diaminen erhalten werden. Hierbei kann es sich um Homopolymere oder Copolymere handeln. Es ist auch möglich, zusätzlich Dicarbonsäuren und Diaminen, Lactame, Aminonitrile oder Aminocarbonsäuren einzusetzen, beispielsweise Caprolactam oder Capryllactam.

Neben Dicarbonsäuren und Diaminen können auch Salze aus den Dicarbonsäuren und Diaminen als Ausgangsmonomere eingesetzt werden.

Die Polyamide können aliphatisch, teilaromatisch oder aromatisch sein. Sie können zudem amorph, kristallin oder teilkristallin sein. Die Polyamide können ferner beliebige geeignete Viskositäten, bzw. Molekulargewichte aufweisen. Besonders geeignet sind Polyamide mit aliphatischen, teilkristallinen oder teilaromatischen sowie amorphen Aufbau.

Sie können beispielsweise Viskositätszahlen von 90 bis 350, vorzugsweise 110 bis 240 ml/g aufweisen, bestimmt in einer 0,5 Gew.-%-igen Lösung in 96 Gew.-%-iger Schwefelsäure bei 25 °C gemäß ISO 307.

Als Dicarbonsäuren sind Alkandicarbonsäuren mit 6 bis 12, insbesondere 6 bis 10 Kohlenstoffatomen und aromatischen Dicarbonsäuren bevorzugt einsetzbar. Hier seien Adipinsäure, Azelainsäure, Sebacinsäure, Dodecandisäure und Terephthal- und/oder Isophthalsäure als Säuren genannt.

Als Diamine eignen sich besonders Alkandiamine mit 2 bis 12, insbesondere 6 bis 8 Kohlenstoffatomen sowie m-Xylylendiamin, Di(alpha-aminophenyl)methan, Di(4-aminocyclohexyl)methan, 2,2-Di(aminophenyl)propan oder 2,2-Di(4-aminocyclohexyl)propan sowie p-Phenylendiamin.

Bevorzugte Polyamide sind Polyhexamethylenadipinsäureamid (PA66) und Polyhexamethylensebacinsäureamid (PA610) sowie Copolyamide 6/66, insbesondere mit einem Anteil von 5 bis 20 Gew.-% an Caprolactameinheiten.

Ferner seien Polyamide erwähnt, die sich durch Kondensation von 1,4-Diaminobutan und Adipinsäure unter erhöhter Temperatur ableiten (Polyamid-4,6).

Ferner haben sich solche teilaromatischen Copolyamide, wie PA 66/6T als besonders vorteilhaft erwiesen, deren Triamingehalt weniger als 0,5 Gew.-%, vorzugsweise weniger als 0,3 Gew.-% beträgt, siehe EP-A-0 299 444 und WO 2008/074687.

Die nachfolgende nicht abschließende Aufstellung enthält die genannten, so wie weitere Polyamide im Sinne der Erfindung (in Klammern sind die Monomeren angegeben):
PA 26 (Ethylendiamin, Adipinsäure)
PA 210 (Ethylendiamin, Sebacinsäure)
PA 46 (Tetramethylendiamin, Adipinsäure)
PA 66 (Hexamethylendiamin, Adipinsäure)
PA 69 (Hexamethylendiamin, Azelainsäure)
PA 610 (Hexamethylendiamin, Sebacinsäure)
PA 612 (Hexamethylendiamin, Decandicarbonsäure)
PA 613 (Hexamethylendiamin, Undecandicarbonsäure)
PA 1212 (1,12-Dodecandiamin, Decandicarbonsäure)
PA 1313 (1,13-Diaminotridecan, Undecandicarbonsäure)
PA MXD6 (m-Xylylendiamin, Adipinsäure)
PA TMDT (Trimethylhexamethylendiamin, Terephthalsäure)
Polyphenylendiaminterephthalamid (p-Phenylendiamin, Terephthalsäure)

Diese Polyamide sind an sich bekannt. Einzelheiten zu ihren Herstellungen findet der Fachmann in Ullmanns Enzyklopädie der Technischen Chemie, 4. Auflage, Bd. 19, S. 39-54, Verlag Chemie, Weinmann 1980, sowie Ullmanns Encyclopedia of Industrial Chemistry, Vol. A21, S. 179-206, VCH Verlag, Weinheim 1992, sowie Stoeckhert, Kunststofflexikon, S. 425-428, Hanser Verlag München 1992 (Stichwort "Polyamide" und folgende).

Zudem ist es erfindungsgemäß möglich, funktionalisierende Verbindungen in den Polyamiden vorzusehen, die zur Anbindung an Carboxyl- oder Aminogruppen befähigt sind und die z. B. mindestens eine Carboxyl-, Hydroxyl- oder Aminogruppe aufweisen. Dabei handelt es sich vorzugsweise um
- verzweigend wirkende Monomere, die z. B. mindestens drei Carboxyl- oder Aminogruppen aufweisen,
- Monomere, die zur Anbindung an Carboxyl- oder Aminogruppen befähigt sind, z. B. durch Epoxy-, Hydroxy-, Isocyanato-, Amino- und/oder Carboxylgruppen, und funktionelle Gruppen aufweisen, ausgewählt aus Hydroxyl-, Ether-, Ester-, Amid-, Imin-, Imid-, Halogen-, Cyano- und Nitrogruppen, C-C-Doppel- oder -Dreifachbindungen,
- oder um Polymerblöcke, die zur Anbindung an Carboxyl- oder Aminogruppen befähigt sind, beispielsweise um Poly-p-aramidoligomere.

Durch den Einsatz der funktionalisierenden Verbindungen kann das Eigenschaftsspektrum der hergestellten Polyamide in weiten Bereichen frei eingestellt werden.

Beispielsweise können Triacetondiamin-Verbindungen als funktionalisierende Monomere eingesetzt werden. Es handelt sich dabei vorzugsweise um 4-Amino-2,2,6,6-tetramethylpiperidin oder 4-Amino-1-alkyl-2,2,6,6-tetramethylpiperidin, in denen die Alkylgruppe 1 bis 18 C-Atome aufweist oder durch eine Benzylgruppe ersetzt ist. Die Triacetondiamin-Verbindung ist in einer Menge von vorzugsweise 0,03 bis 0,8 mol-%, besonders bevorzugt 0,06 bis 0,4 mol-%, jeweils bezogen auf 1 Mol Säureamid-Gruppen des Polyamids, vorhanden. Für eine weitere Beschreibung kann auf die DE-A-44 13 177 verwiesen werden.

An den zweiten Schritt des erfindungsgemäßen Verfahrens kann sich noch eine Nachkondensation bei Umgebungsdruck anschließen, vorzugsweise unter Spülen mit Inertgas. Durch die Nachkondensation kann das Molekulargewicht nochmals signifikant erhöht werden.

Die erhältlichen Polyamide können in bekannter Weise zur Herstellung von Fasern, Folien oder Formkörpern eingesetzt werden. Die Polyamide können den Hauptteil thermoplastischer Formmassen ausmachen.

Die thermoplastischen Formmassen können ferner weitere Zusatzstoffe wie weitere Füllstoffe, z. B. Glasfasern, Stabilisatoren, Oxidationsverzögerer, Mittel gegen Wärmezersetzung und Zersetzung durch ultraviolettes Licht, Gleit- und Entformungsmittel, Färbemittel wie Farbstoffe und Pigmente, Keimbildungsmittel, Weichmacher usw. enthalten. Typischerweise liegen diese weiteren Zusatzstoffe in Mengen von 0 bis 50 Gew.-%, vorzugsweise 0 bis 35 Gew.-% vor. Für eine nähere Beschreibung möglicher Zusatzstoffe kann auf die WO 2008/074687, Seiten 31 bis 37 verwiesen werden.

Die Herstellung der thermoplastischen Formmassen erfolgt z. B. durch Extrusionsverfahren bei einer Temperatur vorzugsweise im Bereich von 170 bis 350 °C, besonders bevorzugt 200 bis 300 °C.

Es kann beispielsweise ein wie in DE-A-10 2007 029 008 beschriebenes Verfahren zum Einsatz kommen. Ferner kann für die Herstellung auf WO 2009/000408 verwiesen werden.

Die Weiterverarbeitung der thermoplastischen Formmasse kann nach bekannten Verfahren erfolgen, beispielsweise durch Spritzgießen oder Formpressen.

Die Erfindung wird durch die nachfolgenden Beispiele näher erläutert.

### Beispiele

### Beispiel 1

### Herstellung von Polyamid-6.6

Polyamid-6.6 wurde durch diskontinuierliche Kondensation in einem Zweischnecken-Kneter hergestellt. Dazu wurden 1,3 kg AH-Salz und 0,9 kg Wasser unter Kneten stufenweise auf 160 °C erwärmt. Der resultierende Druck betrug dabei etwa 5 bar. Bei diesen Bedingungen wurde der größte Teil des Wassers abdestilliert. Die Rotationsgeschwindigkeit des Kneters betrug etwa 25 min⁻¹. Das Druckniveau von etwa 5 bar wurde mit abnehmendem Wassergehalt durch Erhöhen der Temperatur auf 220 °C eingestellt, dabei wurde die Destillationsmenge manuell mit einem Nadelventil eingestellt. Mit abnehmendem Wassergehalt wurde der Dampfdruck des Gemisches vermindert, wodurch die Temperatur konstant bei einer Maximaltemperatur von etwa 220 °C eingestellt wurde.

Nach einer Verminderung des Drucks auf Umgebungsdruck von etwa 1 bar wurde die Mischkammer mit Stickstoff gespült, um verbleibenden Wasserdampf zu entfernen und den Zutritt von Luft zu verhindern. Die Verminderung des Wassergehalts führt zu einer Zunahme der Viskosität des Wasser/Polymer-Gemisches. Ein Maximalwert der Energieaufnahme des Knetmotors wurde beobachtet, der den Phasenumbruch anzeigte. Danach wurden feste Teilchen des Polykondensats erzeugt, und die Energieaufnahme verminderte sich wieder. Nach Öffnen des Kneters wurde das Material als freifließendes Granulat erhalten.

Das erhaltene Polyamid-6.6 wies eine Viskositätszahl von 93 ml/g, einen Aminoendgruppen-Gehalt von 46 mmol/kg, einen Carboxylendgruppen-Gehalt von 165 mmol/kg, ein Zahlenmittel des Molekulargewichts von 16200 g/mol, ein Gewichtsmittel des Molekulargewichts von 39600 g/mol und ein Verhältnis M_{W}/Mₙ von 2,4 auf.

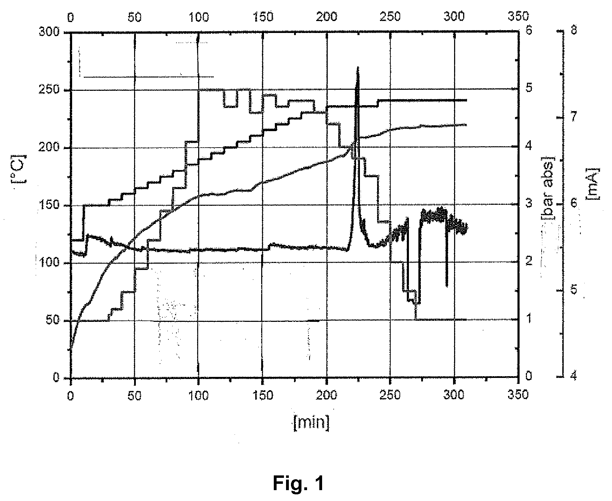

Die Versuchsbedingungen sind in der beigefügten Figur 1 dargestellt.

Dabei zeigt Figur 1 den Verlauf für den Druck (in bar abs), die Vorlauftemperatur (in °C), die Kammertemperatur (in °C) und die Energieaufnahme des Antriebs (in mA) gegen die Zeit (in min.). Die entsprechenden Kurven sind in der Figur bei einer Zeit von 100 Minuten von oben nach unten zu sehen.

### Beispiel 2

Zur Herstellung eines teilaromatischen Polyamids wurde ein 10 Liter fassender, elektrisch beheizter, gerührter Tankreaktor eingesetzt. Ein Monomersalz-Gemisch der folgenden Zusammensetzung wurde bei Raumtemperatur eingefüllt:

| | |
|---|---|
| Hexamethylendiamin | 1726,7 kg |
| m-Phenylenbis(methylamin) | 99,6 g |
| Terephthalsäure | 1822,3 g |
| Isophthalsäure | 749,2 kg |
| Natriumhypophosphitmonohydrat | 1,36 kg |

Der Schmelzpunkt des resultierenden Monomersalzes wurde durch DSC bestimmt und betrug 228 °C.

Nachfolgend wurde der Reaktor verschlossen und es wurden dreifach 10 bar Stickstoff aufgepresst und abgelassen, um Sauerstoffspuren zu entfernen. Anschließend wurde der Reaktor auf eine Temperatur von 250 °C aufgeheizt. Die Polykondensation fand im geschlossenen Reaktor bei dieser Reaktortemperatur für 2 Stunden statt. Nach 15 Minuten Reaktionszeit verfestigte sich das Reaktionsgemisch und die Reaktion wurde unter Bildung von Wasser für den verbleibenden Zeitanteil bis 2 Stunden fortgesetzt. Nach 2 Stunden wurde der Reaktor auf Raumtemperatur abgekühlt, und das feste Produkt wurde durch GPC untersucht. Das Polyamid wies ein Zahlenmittel des Molekulargewichts von 3820 g/mol, ein Gewichtsmittel des Molekulargewichts von 8120 g/mol und ein Verhältnis M_{W}/Mₙ von 2,1 auf.

Anschließend wurden 50 g dieses Produkts in ein 200 ml fassendes Glasgefäß eines Rotationsverdampfers gefüllt und im Heizbad unter 30 l/h Stickstoffstrom und Normaldruck auf 250 °C erwärmt. Nach 30 Stunden wurde die Probe auf Raumtemperatur abgekühlt, und das Molekulargewicht wurde durch GPC-Messung bestimmt. Das erhaltene Polyamid wies ein Zahlenmittel des Molekulargewichts von 19800 g/mol, ein Gewichtsmittel des Molekulargewichts von 67500 g/mol und ein Verhältnis M_{W}/Mₙ von 3,4 auf.

## Patentansprüche

1. Verfahren zur Herstellung von Polyamiden durch Polykondensation von polyamidbildenden, polykondensierbaren Monomeren und/oder Oligomeren, in diese enthaltenden Reaktionsgemischen, die wasserhaltig sind, aber frei von organischen Lösungsmitteln sind, wobei die Polykondensation in einem Reaktor mit Mischer unter Vermischen in einem ersten Schritt in flüssiger Phase erfolgt und nach einem während des Prozesses im selben Reaktor stattfindenden Phasenumbruchs in einem nachfolgenden zweiten Schritt in fester Phase erfolgt, wobei zumindest im zweiten Schritt die Temperatur im Reaktor unterhalb des Schmelzpunktes des Polyamids liegt, und wobei die polykondensierbaren Monomere und/oder Oligomere zu Beginn der Polykondensation in einem Gewichtsverhältnis zu Wasser im Bereich von 0,5 : 1 bis 5 : 1 vorliegen.

2. Verfahren nach Anspruch 1, **dadurch gekennzeichnet, dass** im zweiten Schritt die Temperatur im Reaktor oberhalb der Glasübergangstemperatur des Polyamids liegt.

3. Verfahren nach Anspruch 1 oder 2, **dadurch gekennzeichnet, dass** das Polyamid einen Schmelzpunkt von mindestens 260°C aufweist.

4. Verfahren nach einem der Ansprüche 1 bis 3, **dadurch gekennzeichnet, dass** vor der Polykondensation im ersten Schritt keine Polykondensation in fester Phase erfolgt.

5. Verfahren nach einem der Ansprüche 1 bis 4, **dadurch gekennzeichnet, dass** im zweiten Schritt die Maximaltemperatur im Reaktor mindestens 25°C unter dem Schmelzpunkt des Polyamids liegt.

6. Verfahren nach Anspruch 5, **dadurch gekennzeichnet, dass** im zweiten Schritt die Maximaltemperatur im Reaktor mindestens 30°C, insbesondere mindestens 35°C unter dem Schmelzpunkt des Polyamids liegt.

7. Verfahren nach einem der Ansprüche 1 bis 6, **dadurch gekennzeichnet, dass** die Polykondensation bei einem Druck von maximal 10 bar, vorzugsweise maximal 7 bar, insbesondere maximal 5,5 bar durchgeführt wird.

8. Verfahren nach einem der Ansprüche 1 bis 7, **dadurch gekennzeichnet, dass** die Temperatur im Reaktor im Laufe der Polykondensation bis zum Phasenumbruch kontinuierlich und/oder stufenweise ansteigt.

9. Verfahren nach einem der Ansprüche 1 bis 8, **dadurch gekennzeichnet, dass** während der Polykondensation im ersten und/oder zweiten Schritt Wasser und/oder bei der Kondensation entstehende niedrigsiedende Verbindungen gasförmig abgetrennt werden.

10. Verfahren nach einem der Ansprüche 1 bis 9, **dadurch gekennzeichnet, dass** sich an den zweiten Schritt eine Nachkondensation bei Umgebungsdruck, vorzugsweise unter Spülen mit Inertgas, anschließt.

## Claims

1. A process for producing polyamides by polycondensation of polycondensable polyamide-forming monomers and/or oligomers in reaction mixtures comprising same, which are water-containing but are free from organic solvents, wherein the polycondensation is effected in an agitated reactor under agitation in a first step in the liquid phase and after a phase change taking place during the process in the same reactor is effected in a subsequent second step in the solid state, wherein the temperature in the reactor is below the melting point of the polyamide in the second step at least, wherein the polycondensable monomers and/or oligomers are present at the start of the polycondensation in a weight ratio to water ranging from 0.5:1 to 5:1.

2. The process according to claim 1 wherein the temperature in the reactor is above the glass transition point of the polyamide in the second step.

3. The process according to claim 1 or 2 wherein the polyamide has a melting point of at least 260°C.

4. The process according to any of claims 1 to 3 wherein no solid-state polycondensation is effected before the polycondensation in the first step.

5. The process according to any of claims 1 to 4 wherein the maximum temperature in the reactor is at least 25°C below the melting point of the polyamide in the second step.

6. The process according to claim 5 wherein the maximum temperature in the reactor is at least 30°C and especially at least 35°C below the melting point of the polyamide in the second step.

7. The process according to any of claims 1 to 6 wherein the polycondensation is conducted at a pressure of not more than 10 bar, preferably not more than 7 bar and especially not more than 5.5 bar.

8. The process according to any of claims 1 to 7 wherein the temperature in the reactor rises continuously and/or incrementally in the course of the polycondensation up to the phase change.

9. The process according to any of claims 1 to 8 wherein low-boiling compounds formed in the course of the condensation and/or water are separated off in gaseous form during the first and/or second step of the polycondensation.

10. The process according to any of claims 1 to 9 wherein the second step is followed by a postcondensation at ambient pressure, preferably under flushing with an inert gas.

## Revendications

1. Procédé de fabrication de polyamides par polycondensation de monomères et/ou oligomères polycondensables formant des polyamides, dans des mélanges réactionnels contenant ceux-ci, qui contiennent de l'eau mais qui sont exempts de solvants organiques, la polycondensation ayant lieu dans un réacteur muni d'un mélangeur avec mélange lors d'une première étape en phase liquide et, après un changement de phases qui se produit pendant le procédé dans le même réacteur, lors d'une seconde étape ultérieure en phase solide, la température dans le réacteur étant inférieure au point de fusion du polyamide au moins lors de la seconde étape, et les monomères et/ou oligomères polycondensables étant présents au début de la polycondensation en un rapport en poids avec l'eau dans la plage allant de 0,5:1 à 5:1.

2. Procédé selon la revendication 1, **caractérisé en ce que**, lors de la seconde étape, la température dans le réacteur est supérieure à la température de transition vitreuse du polyamide.

3. Procédé selon la revendication 1 ou 2, **caractérisé en ce que** le polyamide présente un point de fusion d'au moins 260 °C.

4. Procédé selon l'une quelconque des revendications 1 à 3, **caractérisé en ce qu'**aucune polycondensation en phase solide n'a lieu avant la polycondensation lors de la première étape.

5. Procédé selon l'une quelconque des revendications 1 à 4, **caractérisé en ce que**, lors de la seconde étape, la température maximale dans le réacteur est au moins 25 °C en dessous du point de fusion du polyamide.

6. Procédé selon la revendication 5, **caractérisé en ce que**, lors de la seconde étape, la température maximale dans le réacteur est au moins 30 °C, notamment au moins 35 °C, en dessous du point de fusion du polyamide.

7. Procédé selon l'une quelconque des revendications 1 à 6, **caractérisé en ce que** la polycondensation est réalisée à une pression d'au plus 10 bar, de préférence d'au plus 7 bar, notamment d'au plus 5,5 bar.

8. Procédé selon l'une quelconque des revendications 1 à 7, **caractérisé en ce que** la température dans le réacteur augmente continuellement et/ou graduellement au cours de la polycondensation jusqu'au changement de phases.

9. Procédé selon l'une quelconque des revendications 1 à 8, **caractérisé en ce que** de l'eau et/ou des composés de faible point d'ébullition formés lors de la condensation sont éliminés sous forme gazeuse pendant la polycondensation lors de la première et/ou de la seconde étape.

10. Procédé selon l'une quelconque des revendications 1 à 9, **caractérisé en ce que** la seconde étape est suivie par une post-condensation à pression ambiante, de préférence avec rinçage par un gaz inerte.
